# EUROPÄISCHE PATENTSCHRIFT

(11) **EP 3 164 632 B1**
(45) Veröffentlichungstag und Bekanntmachung des Hinweises auf die Patenterteilung: **14.02.2018**
(21) Anmeldenummer: 16723931.8
(22) Anmeldetag: 13.04.2016
(51) Int. Cl.: F16L 9/12, F16L 9/133

(54) **FASERVERSTÄRKTER HOHLKÖRPER ZUM DURCHLEITEN VON MEDIEN, INSBESONDERE CHEMISCH UND/ODER MECHANISCH AGGRESSIVEN MEDIEN**
FIBRE-REINFORCED HOLLOW BODY FOR CHANNELLING MEDIA, IN PARTICULAR, CHEMICALLY AND/OR MECHANICALLY AGGRESSIVE MEDIA
CORPS CREUX RENFORCÉ PAR DES FIBRES SERVANT À ACHEMINER DES MILIEUX, EN PARTICULIER DES MILIEUX CHIMIQUEMENT ET/OU MÉCANIQUEMENT AGRESSIFS

(30) Priorität: 16.04.2015 DE 102015105829
(43) Veröffentlichungstag der Anmeldung: 10.05.2017
(73) Patentinhaber: Steuler Korrosionsschutz Holding GmbH, 56427 Siershahn (DE)
(72) Erfinder: GRIMM, Andreas, 56422 Wirges (DE); HEMBSCH, Albert, 17731 Terrades (ES); TROSCHITZ, Ralf, 40468 Düsseldorf (DE)
(74) Vertreter: Launhardt, Thomas
(86) Internationale Anmeldenummer: PCT/DE2016/100174
(87) Internationale Veröffentlichungsnummer: WO 2016/165692

(56) Entgegenhaltungen:
- EP-A1- 0 291 639
- WO-A1-97/12166
- US-A1- 2013 037 155

## Beschreibung

Die Erfindung betrifft einen faserverstärkten Hohlkörper zum Durchleiten von Medien, insbesondere chemisch und/oder mechanisch aggressiven Medien, beispielsweise der chemischen Industrie und/oder der Prozessindustrie.

Derartige Hohlkörper sind beispielsweise faserverstärkte Kunststoffrohre. Die Kunststoffrohre weisen an ihrem Innenumfang eine Schutzschicht auf, durch welche sie gegen chemische und/oder mechanische Angriffe des durchströmenden Mediums geschützt sind. Diese auch als Chemieschutzschicht bezeichnete Schutzschicht ist üblicherweise aus einem harzreichen Material gebildet, in welchem Glasfasern eingebettet sind, um beispielsweise die Sprödigkeit der Schutzschicht zu vermindern. Die Fasern sind für gewöhnlich Bestandteil von Textilglasmatten und/oder Vliesen, welche eingebettet in das harzreiche Material in der Schutzschicht eingelassen sind. Ein derartiger Hohlkörper ist beispielsweise in der EP0291639A1 offenbart. In der Praxis hat es sich gezeigt, dass je nach Einsatzzweck der faserverstärkten Kunststoffrohre die durchströmenden Medien derart aggressiv sein können, dass Verschleißerscheinungen an der Schutzschicht der Kunststoffrohre verfrüht auftreten. Beispielsweise wird durch die durchgeleiteten Medien das harzreiche Material der Schutzschicht schneller als erwartet soweit abgetragen, dass die Textilglasmatten und Vliese freigelegt und Teile davon mit dem Medienstrom mitgerissen werden. Dies führt zum einen zu einem frühzeitigen Ausfall des Kunststoffrohres an sich. Zum anderen ergeben sich frühzeitig Störungen an den Anlagen, in denen die Kunststoffrohre zum Einsatz kommen, da die mitgerissenen Teile der Glasmatten und Vliese Filter, Siebe oder gar die Rohre selbst verstopfen.

Der Erfindung liegt daher die Aufgabe zugrunde, wenigstens eine Möglichkeit vorzuschlagen, einen faserverstärkten Hohlkörper der eingangs genannten Art bereit zu stellen, durch welchen ein verfrühtes Auftreten derartiger Verschleißerscheinungen vermieden wird.

Diese Aufgabe wird mit einem faserverstärkten Hohlkörper gelöst, welcher die Merkmale des Anspruches 1 aufweist.

Vorteilhafte Ausgestaltungen der Erfindung ergeben sich aus den Unteransprüchen, der nachfolgenden Beschreibung und den Figuren.

Nach einer Ausführungsform der Erfindung ist ein faserverstärkter Hohlkörper zum Durchleiten von Medien, insbesondere chemisch und/oder mechanisch aggressiven Medien, beispielsweise der chemischen Industrie und/oder der Prozessindustrie, insbesondere auch von Phosphorwerken, mit einem Grundkörper, aufweisend ein Fasern enthaltendes Material oder bestehend aus einem Fasern enthaltenden Material, und mit einer Schutzschicht zum Schutz des Hohlkörpers, insbesondere des Grundkörpers, gegen chemische und/oder mechanische Angriffe vorgesehen. Es ist ferner vorgesehen, dass die Schutzschicht aus einem faserfreien Material oder im Wesentlichen faserfreien Material gebildet ist.

Durch die Schutzschicht eines solchen Hohlkörpers sind Verschleißerscheinungen und Störungen vermieden, welche durch ein Herauslösen von Fasern aus der Schutzschicht resultieren, beispielsweise aufgrund an der Schutzschicht angreifender chemisch und/oder mechanisch aggressiver Medien, beispielsweise abrasiv wirkender Medien. Zumindest ist derartigen Verschleißerscheinungen und Störungen entgegengewirkt. Denn nach der Erfindung ist die Schutzschicht ohne Fasern aufgebaut oder enthält zumindest lediglich noch einen vernachlässigbaren geringen Anteil an Fasern. Selbst wenn diese Fasern aus der Schutzschicht herausgelöst würden, wären davon etwaige Wartungsintervalle der Anlagen, in denen der Hohlkörper eingesetzt wird, gar nicht oder nur unwesentlich beeinflusst.

Beispielsweise ist es vorgesehen, dass das faserfreie Material ein Polymer, insbesondere ein Harz oder eine Harzzusammensetzung, ist. Dadurch weist die Schutzschicht eine ausreichende Beständigkeit zumindest gegen chemisch aggressive Medien auf.

Nach einer Ausgestaltung der Erfindung ist es vorgesehen, dass die Schutzschicht wenigstens ein Polymer und wenigstens einen faserfreien Füllstoff enthält oder daraus besteht. Dadurch erlangt die Schutzschicht einerseits die erwünschte und notwendige Beständigkeit gegen chemische und/oder mechanische Angriffe der auf die Schutzschicht auftreffenden bzw. an der Schutzschicht entlang strömenden Medien. Darüber hinaus ist sichergestellt, dass bei der Herstellung der Schutzschicht ein Volumenschrumpf weitgehend ausbleibt oder zumindest lediglich in geringem Maße auftritt. Diese Beeinflussung des Volumenschrumpfes ist durch den faserfreien Füllstoff bewirkt.

Beispielsweise weist die Schutzschicht einen Verbundwerkstoff auf oder ist aus einem solchen Verbundwerkstoff gebildet, dessen Matrix wenigstens ein Polymer enthält oder daraus besteht, in welche wenigstens ein faserfreier Füllstoff eingebettet ist. Das Polymer kann das vorstehend beschriebene Polymer sein. Der faserfreie Füllstoff kann der vorstehend beschriebene Füllstoff sein.

Es bietet sich an, dass das wenigstens eine Polymer ein Epoxidharz, ein vorzugsweise ungesättigtes Polyesterharz oder ein Vinylesterharz ist oder enthält. Durch das ungesättigte Polyesterharz oder das Vinylesterharz weist die Schutzschicht eine relativ hohe Chlorbeständigkeit auf. Durch das Epoxidharz weist die Schutzschicht eine relativ hohe Beständigkeit gegen basisch wirkende Medien auf. Bei an der Schutzschicht angreifenden chlorhaltigen Medien, insbesondere Medien mit relativ hohem Chlorgehalt, sollte das wenigstens eine Polymer ein ungesättigtes Polyesterharz oder ein Vinylesterharz sein. Bei einer basischen Belastung der Schutzschicht, sollte das wenigstens eine Polymer ein Epoxidharz sein.

Beispielsweise kommt Epoxidharz auf Basis wenigstens eines Bisphenols, Epoxidharz auf Basis wenigstens eines Novolaks oder aliphatisches Epoxidharz zum Einsatz. Das Polyesterharz kann ein ungesättigtes Polyesterharz sein, beispielsweise auf Basis von HET-Säure und/oder auf Basis von Neophentylglycol. Das Vinylesterharz ist beispielsweise ein auf Basis wenigstens eines Bisphenol A und/oder auf Basis wenigstens eines Novolaks gebildetes Harz.

Es bietet sich ferner an, dass der faserfreie Füllstoff aus Partikeln, insbesondere einer Vielzahl von Partikeln, besteht oder Partikel, insbesondere eine Vielzahl von Partikeln, aufweist. Dadurch ist eine Beeinflussung der mechanischen Materialeigenschaften der Schutzschicht gezielt möglich, indem beispielsweise mehr oder weniger Partikel verwendet werden und/oder Partikel aus einem Material mit hoher oder weniger hoher Härte eingesetzt wird. Beispielsweise kann der Füllstoff pulverförmig in der Schutzschicht vorliegen.

Es hat sich gezeigt, dass anstelle von Fasern der Einsatz von Partikeln anderer Art die gewünschten Materialeigenschaften der Schutzschicht und ebenso die gewünschten Vorteile bei der Herstellung der Schutzschicht erreicht werden können, wobei die Schutzschicht mit derartigen Partikeln gegen chemische Angriffe und/oder gegen mechanische, insbesondere abrasive Angriffe ausreichend beständig ist und ein frühzeitiges Ablösen und Freisetzen der Partikel weitgehend oder sogar vollständig ausbleibt. Auch hat es sich gezeigt, dass mit derartigen Partikeln die Gefahr eines Verstopfens von Rohren, Sieben, Filtern oder sonstigen Komponenten der Anlagen, in denen der Hohlkörper zum Einsatz kommt, deutlich vermindert ist, wenn es tatsächlich zu einem Ablösen und Freisetzen der Partikel kommen sollte. Darüber hinaus kann mittels der Partikel der Volumenschrumpf des Polymers bei der Herstellung der Schutzschicht auf eine gewünschte Größenordnung reduziert werden.

Mittels des faserfreien Füllstoffes lassen sich die mechanischen, chemischen und/oder elektrischen Eigenschaften der Schutzschicht bzw. des faserfreien Materials gezielt beeinflussen, indem je nach angestrebter Materialeigenschaft der Anteil des Füllstoffs an der Gesamtmasse der Schutzschicht, der Anteil der Partikel an der Gesamtmasse der Schutzschicht, die Größe der verwendeten Partikel und das Material der Partikel variiert wird. Auch können dadurch die Verarbeitungseigenschaften des die Schutzschicht bildenden faserfreien Materiales beeinflusst werden.

Es wurde gefunden, dass die Materialeigenschaften der Schutzschicht positiv beeinflusst werden, wenn die Partikel mit einem Äquivalentdurchmesser von etwa 2 Mikrometer bis etwa 7 Millimeter verwendet werden, wobei jeweils Partikel mit im Wesentlich gleicher Partikelgröße oder mit nur relativ geringen Unterschieden in der Partikelgröße eingesetzt werden sollten. Grundsätzlich ist auch eine Streuung der Partikelgrößen über einen weiteren Bereich möglich.

Als Äquivalentdurchmesser ist die in der Korngrößenbestimmung übliche Angabe für die Größe eines Partikels zu verstehen. Der Äquivalentdurchmesser ist insbesondere ein Maß für die Größe eines unregelmäßig geformten Partikels, wie beispielsweise eines Sandkornes. Der Äquivalentdurchmesser berechnet sich aus dem Vergleich einer Eigenschaft des unregelmäßigen Teilchens mit einer Eigenschaft des regelmäßig geformten Teilchens.

Es hat sich beispielsweise gezeigt, dass eine ausreichende Beständigkeit der Schutzschicht gegen chemische Angriffe erreicht ist, wenn nach einer Ausgestaltung der Erfindung zumindest ein Teil der Partikel einen Äquivalentdurchmesser von etwa 2 Mikrometer bis etwa 500 Mikrometer, insbesondere 10 Mikrometer bis 200 Mikrometer, hat.

Es wurde gefunden, dass eine besonders hohe chemische Beständigkeit der Schutzschicht vorliegt, wenn zumindest ein Teil der Partikel einen Äquivalentdurchmesser von 63 Mikrometer bis 90 Mikrometer hat.

Auch hat es sich gezeigt, dass eine ausreichende Beständigkeit der Schutzschicht gegen mechanische, insbesondere abrasive Angriffe erreicht ist, wenn nach einer Ausgestaltung der Erfindung zumindest ein Teil der Partikel einen Äquivalentdurchmesser von etwa 0,2 Millimeter bis etwa 6,3 Millimeter, insbesondere 0,4 Millimeter bis 4 Millimeter, beispielsweise etwa 4,0 Millimeter, hat.

Es wurde gefunden, dass eine besonders hohe mechanische Beständigkeit der Schutzschicht vorliegt, wenn zumindest ein Teil der Partikel einen Äquivalentdurchmesser von 0,63 Millimeter bis 2 Millimeter, beispielsweise etwa 2,0 Millimeter, hat.

Es bietet sich an, dass der Füllstoff chemisch inert beispielsweise bezüglich des Mediums ist, welches mit der Schutzschicht in Berührung gelangt. Dadurch ist gewährleistet, dass etwaige chemische Reaktionen des Füllstoffes mit dem Medium weitgehend oder vollständig ausbleiben. Es ist dadurch einer möglichen Schwächung der Schutzschicht aufgrund solcher Reaktionen wirkungsvoll entgegengewirkt. Auch ist vermieden, dass durch etwaige Reaktionen sich das Medium selbst hinsichtlich seiner chemischen Eigenschaften in unerwünschter Weise verändert.

Nach der Erfindung ist es vorgesehen, dass der Füllstoff eine Keramik ist oder enthält, insbesondere die Partikel aus Keramik bestehen oder Keramik enthalten. Insbesondere ist die Keramik eine technische Keramik. Darunter sind insbesondere Keramikwerkstoffe zu verstehen, die in ihrer Eigenschaft auf technische Anwendungen hin optimiert sind und sich dadurch von der dekorativ eingesetzten Keramik, Fliesen oder Sanitärobjekten und dergleichen beispielsweise durch Reinheit und enger tolerierte Korngrößen in ihren Ausgangsstoffen unterscheiden.

Durch den Einsatz der Keramik wird auf deren Eigenschaften zurückgegriffen, welche im Hinblick auf die chemische Beständigkeit und/oder mechanische Beständigkeit der Schutzschicht relevant sind. Die Keramik weist eine hohe Hitzebeständigkeit auf. Auch weist die Keramik eine hohe Abriebs- und Verschleißfestigkeit auf. Darüber hinaus ist Keramik korrosionsbeständig gegenüber vielen Säuren und Laugen. Auch weist die Keramik eine hohe mechanische Festigkeit auf.

Es wurde gefunden, dass die Schutzschicht eine hohe chemische Beständigkeit hat, wenn nach einer Ausgestaltung der Erfindung der Füllstoff Aluminiumoxid ist oder Aluminiumoxid enthält, insbesondere zumindest ein Teil der Partikel aus Aluminiumoxid gebildet sind oder Aluminiumoxid aufweisen. Es wurde ferner gefunden, dass der Füllstoff eine hohe mechanische Beständigkeit aufweist, wenn nach einer weiteren Ausgestaltung der Erfindung der Füllstoff ein Siliziumcarbid ist oder Siliziumcarbid enthält. Grundsätzlich kann der Füllstoff aus Aluminiumoxid und Siliziumcarbid enthalten.

Ergänzend oder Alternativ kann es vorgesehen sein, dass der Füllstoff Aluminiumtitanat, Bariumtitanat, Berylliumoxid, Zirkonium (IV)-oxid, Titan (IV)-oxid oder eine sonstige oxidische Keramik ist oder enthält. Auch kann es vorgesehen sein, dass der Füllstoff Aluminiumnitrid, Borcarbid, Bornitrid, Siliziumnitrid, Wolframcarbid oder eine sonstige nicht-oxidische Keramik ist oder enthält.

Es wurde gefunden, dass die Materialeigenschaften der Schutzschicht positiv beeinflusst werden, wenn der Füllstoff mit einem Anteil an der Gesamtmasse der Schutzschicht in einem Bereich von etwa 5 Prozent bis etwa 95 Prozent liegt.

Es hat sich gezeigt, dass eine ausreichende Beständigkeit der Schutzschicht gegen chemische Angriffe erreicht ist, wenn nach einer Ausgestaltung der Erfindung der Füllstoff einen Anteil an der Gesamtmasse der Schutzschicht von etwa 5 Prozent bis etwa 60 Prozent, insbesondere 20 Prozent bis 40 Prozent, hat.

Es wurde gefunden, dass eine besonders hohe chemische Beständigkeit der Schutzschicht vorliegt, wenn nach einer Ausgestaltung der Erfindung der Füllstoff einen Anteil an der Gesamtmasse der Schutzschicht von etwa 30 Prozent hat.

Auch hat es sich gezeigt, dass eine ausreichende mechanische Beständigkeit der Schutzschicht erreicht ist, wenn nach einer Ausgestaltung der Erfindung der Füllstoff einen Anteil an der Gesamtmasse der Schutzschicht von etwa 60 Prozent bis etwa 95 Prozent, insbesondere 80 Prozent bis 90 Prozent, hat.

Eine besonders hohe mechanische Beständigkeit wurde erreicht, wenn nach einer Ausgestaltung der Erfindung der Füllstoff einen Anteil an der Gesamtmasse der Schutzschicht von etwa 85 Prozent hat.

Weiterhin hat sich herausgestellt, dass der Hohlkörper eine ausreichende Standzeit im Einsatz beispielsweise von Anlagen der chemischen Industrie und/oder der Prozessindustrie aufweist, wenn die Schutzschicht eine Dicke im Bereich von etwa 0,3 Millimeter bis etwa 40 Millimeter, insbesondere von etwa 0,5 Millimeter bis etwa 40 Millimeter aufweist. Insbesondere sollte die Dicke der Schutzschicht im Wesentlichen gleichleibend sein. Grundsätzlich ist es auch möglich, die Schutzschicht mit Bereichen zueinander unterschiedlicher Dicke auszubilden oder mit einem variierenden Dickenverlauf auszubilden.

Es hat sich gezeigt, dass die Schutzschicht eine ausreichende Standzeit gegen chemische Angriffe aufweist, wenn nach einer Ausgestaltung der Erfindung die Schutzschicht eine Dicke von etwa 0,3 Millimeter bis etwa 10 Millimeter, insbesondere von 0,5 Millimeter bis 10 Millimeter, insbesondere 3 Millimeter bis 8 Millimeter hat.

Es wurde gefunden, dass die Schutzschicht eine besonders hohe Lebensdauer im Hinblick auf die chemische Beständigkeit hat, wenn nach einer Ausgestaltung der Erfindung die Schutzschicht eine Dicke von etwa 6 Millimeter hat.

Es hat sich ferner gezeigt, dass die Schutzschicht eine ausreichende Standzeit gegen mechanische Angriffe aufweist, wenn nach einer Ausgestaltung der Erfindung die Schutzschicht eine Dicke von 5 Millimeter bis 40 Millimeter, insbesondere 10 Millimeter bis 30 Millimeter, hat.

Es wurde gefunden, dass die Schutzschicht eine besonders hohe Lebensdauer im Hinblick auf die mechanische Beständigkeit hat, wenn nach einer Ausgestaltung der Erfindung die Schutzschicht eine Dicke von etwa 25 Millimeter hat.

Nach einer weiteren Ausgestaltung der Erfindung ist es vorgesehen, dass das Fasern enthaltende Material des Grundkörpers wenigstens ein Polymer ist oder enthält. Beispielsweise ist der Grundkörper aus Kunststoff gebildet, beispielsweise aus langfaserverstärktem Kunststoff.

Es kann vorgesehen sein, dass das Material des Grundkörpers ein Verbundmaterial ist, dessen Matrix durch das wenigstens eine Polymer gebildet ist oder das wenigstens eine Polymer enthält, in welche die Fasern eingebettet sind. Insbesondere sind die Fasern des Grundkörpers zumindest teilweise als Verstärkungsfasern ausgebildet. Die Fasern können zumindest teilweise Langfasern sein.

Es hat sich gezeigt, dass durch ein derartiges Material der Grundkörper eine ausreichende Bauteilstabilität und Bauteilfestigkeit aufweist, um ein frühzeitiges Bauteilversagen im Einsatz einer Anlage, beispielsweise einer Chemieanlage zu vermeiden.

Das wenigstens eine Polymer kann ein Epoxidharz, ein vorzugsweise ungesättigtes Polyesterharz oder ein Vinylesterharz sein oder enthalten. Durch das ungesättigte Polyesterharz oder das Vinylesterharz weist der Grundkörper eine relativ hohe Chlorbeständigkeit auf. Durch das Epoxidharz weist der Grundkörper eine relativ hohe Beständigkeit gegen basisch wirkende Medien auf.

Auch ergeben sich durch das ungesättigte Polyesterharz und/oder das Vinylesterharz Vorteile bei der Verarbeitung. So kann etwa die Gelierzeit flexibler eingestellt werden als beispielsweise im Vergleich zu Epoxidharz. Durch das Epoxidharz wiederum werden bessere mechanische Eigenschaften des Grundkörpers im Vergleich zu ungesättigtem Polyesterharz oder Vinylesterharz erreicht.

Beispielsweise kommt Epoxidharz auf Basis wenigstens eines Bisphenols, Epoxidharz auf Basis wenigstens eines Novolaks oder aliphatisches Epoxidharz zum Einsatz. Das Polyesterharz kann ein ungesättigtes Polyesterharz sein, beispielsweise auf Basis von HET-Säule und/oder auf Basis von Neophentylglycol. Das Vinylesterharz ist beispielsweise ein auf Basis wenigstens eines Bisphenol A und/oder auf Basis wenigstens eines Novolaks gebildetes Harz.

Nach einer weiteren Ausgestaltung der Erfindung ist es vorgesehen, dass die Fasern des Grundkörpers wenigstens einen textilen Schlauch und/oder wenigstens eine textile Wickelschicht bilden. Dadurch ist mittels der Fasern eine wirkungsvolle Verstärkungsstruktur gebildet, welche die Festigkeit und Stabilität des Grundkörpers gewährleistet. Beispielsweise ist zumindest ein Teil der Fasern des Grundkörpers Bestandteil einer Matte, eines Gewebes, eines Geleges, eines Gewirkes, eines Gestrickes oder eines Rovings.

Ergänzend oder alternativ können die Fasern des Grundkörpers zumindest teilweise Glasfasern sein, insbesondere Fasern aus E-Glas, oder chemikalienbeständige Fasern aus C-Glas, E-Glas, E-CR-Glas oder AR-Glas, oder Fasern aus borfreiem Glas.

Es hat sich gezeigt, dass eine ausreichende Stabilität des Grundkörpers erreicht ist, wenn nach einer Ausgestaltung der Erfindung die Fasern des Grundkörpers einen Anteil an seiner Gesamtmasse von 30 Prozent bis 70 Prozent, insbesondere 38 Prozent bis 60 Prozent, haben.

Eine besonders gute Bauteilfestigkeit für die große Bandbreite der Einsatzzwecke des Hohlkörpers ist gegeben, wenn nach einer weiteren Ausgestaltung der Erfindung die Fasern einen Anteil an der Gesamtmasse des Grundkörpers von etwa 50 Prozent haben.

Um den Anforderungen an die Bauteilfestigkeit des Hohlkörpers über einen vorgegebenen Lebensdauerzyklus ausreichend zu gewährleisten, bietet es sich an, dass der Grundkörper eine Wanddicke von etwa 2 Millimeter bis etwa 40 Millimeter, insbesondere 3 Millimeter bis 20 Millimeter hat. Insbesondere sollte die Wanddicke im Wesentlichen gleichleibend sein. Grundsätzlich ist es auch möglich, den Grundkörper mit Bereichen zueinander unterschiedlicher Dicke auszubilden oder mit einem variierenden Dickenverlauf auszubilden.

Nach einer weiteren Ausgestaltung der Erfindung ist es vorgesehen, dass die Schutzschicht eine Innenschicht ist. Der Grundkörper kann dann eine witterungsbeständige Außenschicht aufweisen. Dadurch bildet die Schutzschicht einen Schutz gegen mechanische und/oder chemische Angriffe eines bzw. des durch den Hohlkörper durchgeleiteten Mediums. Durch die Außenschicht ist der Grundkörper gegen Umwelt- und Witterungseinflüsse geschützt. Beispielsweise weist die Außenschicht auch einen UV-Schutz auf.

Grundsätzlich kann es auch vorgesehen sein, dass die Schutzschicht eine Außenschicht des Grundkörpers bildet oder ist.

Um der witterungsbeständigen Außenschicht eine ausreichende Stabilität zu geben, ist es nach einer weiteren Ausgestaltung der Erfindung vorgesehen, dass die witterungsbeständige Außenschicht wenigstens ein Vlies enthält. Durch das Vlies, insbesondere die Fasern des Vlieses, ist eine Verstärkungsstruktur ausgebildet.

Die witterungsbeständige Außenschicht kann aus einem Polymer gebildet sein oder ein Polymer enthalten. Beispielsweise ist das wenigstens eine Polymer ein Epoxidharz, ein Polyesterharz oder ein Vinylesterharz.

Beispielsweise ist das Vlies oder sind die Fasern des Vlieses zumindest teilweise Glasfasern oder synthetische Fasern.

Es wurde gefunden, dass die witterungsbeständige Außenschicht eine optimale Wirkung auf den Hohlkörper aufweist, wenn nach einer Ausgestaltung die Erfindung die Außenschicht eine Wanddicke von 50 Mikrometer bis 200 Mikrometer hat oder eine Wanddicke von 50 Mikrometer unterschreitet. Insbesondere sollte die Wanddicke im Wesentlichen gleichleibend sein. Grundsätzlich ist es auch möglich, die Außenschicht mit Bereichen zueinander unterschiedlicher Dicke auszubilden oder mit einem variierenden Dickenverlauf auszubilden.

Sofern die technischen Anforderungen an den Hohlkörper eine elektrische Leitfähigkeit oder elektrische Ableitfähigkeit voraussetzen, kann es vorgesehen sein, dass das Material der Schutzschicht, das Material des Grundkörpers und/oder das Material der Außenschicht elektrisch leitfähig oder elektrisch ableitfähig ist.

Je nach Erfordernis kann es ferner vorgesehen sein, dass das Material der Schutzschicht, das Material des Grundkörpers und/oder das Material der Außenschicht schwer entflammbar ist.

Auch kann es vorgesehen sein, dass das Material der Schutzschicht, das Material des Grundkörpers ein gleiches Polymer enthalten oder aus einem gleichen Polymer bestehen. Dadurch ist der Hohlkörper kostengünstig zu realisieren.

In einfacher Weise ist der Hohlkörper dann technisch zu realisieren, wenn die Schutzschicht an dem Grundkörper aufgebracht ist, wobei auch wenigstens eine Zwischenschicht zwischen dem Grundkörper und der Schutzschicht liegen kann.

Der Grundkörper kann ferner durch wenigstens eine Tragschicht gebildet sein. Beispielsweise kann der Hohlkörper durch drei Schichten aufgebaut sein, von denen eine Schicht die den Grundkörper bildende Tragschicht, die andere Schicht die vorstehend beschriebene Schutzschicht und die wiederum andere die vorstehend beschriebene Außenschicht ist.

Der Hohlkörper kann beliebige Formen aufweisen oder ein beliebiges Formteil ausbilden, welches zur Durchleitung eines Mediums dient. Beispielsweise ist der Hohlkörper ein länglicher Hohlkörper, insbesondere ein Rohrelement. Der Hohlkörper kann auch ein Fitting, eine Reduzierung, eine Muffe, eine Düse, ein Flansch oder ein Bogen sein.

Weiterhin umfasst die Offenbarung eine chemische Zusammensetzung zur Ausbildung einer gegen chemische und/oder mechanische Angriffe schützenden Schutzschicht eines Hohlkörpers, insbesondere Kunststoff-Hohlkörpers, zum Durchleiten von Medien, insbesondere chemisch und/oder mechanisch aggressiven Medien, beispielsweise der chemischen Industrie und/oder der Prozessindustrie. Beispielsweise ist die Schutzschicht eine Innenschicht eines Hohlraumes des Hohlkörpers, welcher zum Durchleiten derartiger Medien dient. Der Hohlkörper kann der vorstehend beschriebene Hohlkörper oder ein Hohlkörper der vorstehend beschriebenen Art sein.

Es ist vorgesehen, dass die chemische Zusammensetzung aus einem faserfreien Material oder im Wesentlichen faserfreien Material besteht. Dadurch weist die daraus herstellte Schutzschicht den Vorteil auf, dass Verschleißerscheinungen vermieden sind, welche durch ein Herauslösen von Fasern aus der Schutzschicht resultieren, beispielsweise aufgrund an der Schutzschicht angreifender chemisch und/oder mechanisch aggressiver Medien. Denn nach der Erfindung ist die Schutzschicht ohne Fasern aufgebaut oder enthält zumindest lediglich noch einen vernachlässigbaren geringen Anteil an Fasern. Selbst wenn diese Fasern aus der Schutzschicht herausgelöst würden, wären davon etwaige Wartungsintervalle der Anlagen, in denen der Hohlkörper eingesetzt wird, gar nicht oder nur unwesentlich beeinflusst.

Nach einer Ausgestaltung der Erfindung ist es vorgesehen, dass das Material ein Verbundmaterial ist und wenigstens ein Polymer, insbesondere wenigstens ein Harz, und wenigstens einen faserfreien Füllstoff enthält oder daraus besteht.

Eine gute Verarbeitung des Materiales, insbesondere des Verbundwerkstoffes ist gegeben, wenn der Füllstoff pulverförmig vorliegt und/oder das Polymer in fließfähiger Form vorliegt. Beispielsweise ist der Füllstoff ein Keramikpulver.

Beispielsweise enthält die chemische Zusammensetzung neben dem Harz und dem Füllstoff zusätzlich wenigstens einen Beschleuniger und wenigstens einen Härter, insbesondere wenn das wenigstens eine Polymer ein ungesättigtes Polyesterharz oder ein Vinylesterharz ist oder enthält. Insbesondere wenn das wenigstens eine Polymer ein Epoxidharz ist oder enthält, hat die chemische Zusammensetzung neben dem Harz und dem Füllstoff zusätzlich wenigstens einen Härter, jedoch bevorzugt keinen Beschleuniger.

Weiterhin umfasst die Offenbarung ein Verfahren zur Herstellung des vorstehend beschriebenen Hohlkörpers oder eines Hohlkörpers der vorstehend beschriebenen Art. Das Verfahren zeichnet sich dadurch aus, dass zur Ausbildung der Schutzschicht eine aus einem faserfreien Material oder im Wesentlichen faserfreien Material bestehende chemische Zusammensetzung, beispielsweise die vorstehend beschriebene chemische Zusammensetzung, auf ein wenigstens einen Hohlraum des Hohlkörpers ausformendes Kernelement aufgebracht wird und darauf anschließend ein Material zum Aufbau einer den Grundkörper bildenden Tragschicht aufgebracht wird. Es ist dadurch in herstellungstechnisch einfacher Weise ein Hohlkörper mit einer Schutzschicht zu realisieren, welche faserfrei oder im Wesentlichen faserfrei ist.

Durch die Erfindung kann ein Hohlkörper, beispielsweise in Art eines Rohrelementes realisiert werden, welcher eine hohe chemische Beständigkeit gegen chemische Angriffe von durchströmenden Medien aufweist. Dadurch sind eine höhere Betriebssicherheit und eine längere Betriebszeit der Anlage, in welcher der Hohlkörper zum Einsatz kommt, gewährleistet.

Auch kann durch die Erfindung ein Hohlkörper realisiert werden, dessen Schutzschicht im Zuge eines chemischen und/oder mechanischen Angriffes des Mediums dauerhaft keine Fasern freisetzt oder nur vernachlässigbar wenige Fasern freisetzt, so dass ein Verstopfen der Leitungen sowie ein Zusetzen etwa von Sieben und/oder Filter, verhindert sind.

Insgesamt sind durch den Hohlkörper die Anzahl von betriebsbedingten Stillständen und die Dauer der Stillstandszeiten der Anlagen, in denen der Hohlkörper zum Einsatz kommt, reduziert, da selbst bei durchgeleiteten, aggressiven, insbesondere hochaggressiven Medien, es zu keinem frühzeitigen Bauteilausfall kommt und ein erhöhter Reinigungsaufwand durch Reinigen verstopfter Leitungen und zugesetzter Siebe vermieden ist.

Darüber hinaus ist der Hohlkörper sowohl für die Durchleitung von sauren Medien als auch für die Durchleitung von basischen Medien geeignet. Für eine Durchleitung von sauren Medien kann die Schutzschicht durch ein ungesättigtes Polysterharz oder ein Vinylesterharz gebildet sein, welches einen Matrixwerkstoff für das Verbundmaterial ausbildet. Im Falle von durchgeleiteten basischen Medien, kann auf Epoxidharz als Matrixwerkstoff zurückgegriffen werden.

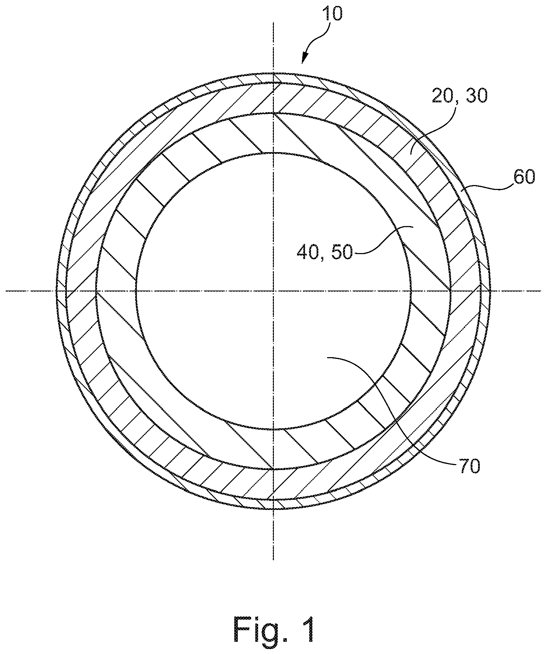

Weitere Ziele, Vorteile, Merkmale und Anwendungsmöglichkeiten der vorliegenden Erfindung ergeben sich aus der nachfolgenden Beschreibung mehrerer Ausführungsbeispiele anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigt die einzige Figur (Fig.) eine mögliche Ausführungsform eines Hohlkörpers 10 zum Durchleiten von Medien am Beispiel einer Querschnittsdarstellung eines Rohrelementes.

Der Hohlkörper 10 ist zum Durchleiten von Solen oder sonstigen chlorhaltigen Flüssigkeiten geeignet. Auch kann der Hohlkörper 10 als Katholytleitung oder Anolytleitung in der Chlor-Alkali-Elektrolyse eingesetzt werden. Grundsätzlich ist der Hohlkörper 10 zum Durchleiten sämtlicher Medien, wie beispielsweise Flüssigkeiten und/oder Gase geeignet, welche mechanisch und/oder chemisch aggressiv sind.

Der Hohlkörper 10 weist eine Schutzschicht 40 auf, welche zum Schutz des Hohlkörpers 10 gegen chemische und/oder mechanische Angriffe des an dem Hohlkörper 10 in Berührung tretenden Mediums dient. Es ist vorgesehen, dass die Schutzschicht 40 aus im Wesentlichen faserfreien Material gebildet ist. Dadurch ist vermieden, dass über die Dauer des Einsatzes des Hohlkörpers 10 in einer Anlage ein üblicher korrosionsbedingter Abtrag der Schutzschicht 40 soweit stattfinden kann, dass etwaige in der Schutzschicht 40 enthaltene Fasern freigesetzt werden und es zu einem Verstopfen des Hohlkörpers und/oder einem Zusetzen etwaiger Siebelemente, Filter oder anderer Bauteile der Anlage kommt. Indem die Schutzschicht aus dem im Wesentlichen faserfreien Material gebildet ist, ist ein Freisetzen etwaiger Fasern vermieden.

Bevorzugt bildet die Schutzschicht 40 die Innenschicht 50 des Hohlkörpers 10, welche einen Hohlraum 70 des Hohlkörpers 10 umgibt. Es ist mittels der Schutzschicht 40 dann der Hohlkörper 10 gegen etwaige mechanische und/oder chemische Angriffe des durch den Hohlkörper 10 hindurch geleiteten Mediums geschützt.

Der Hohlkörper 10 weist einen Grundkörper 20 auf, welcher im Wesentlichen formgebend für den Hohlkörper 10 ist und bevorzugt aus einem faserverstärkten Kunststoff besteht und einen faserverstärkten Kunststoff enthält. Beispielsweise ist der Grundkörper 20 durch eine Tragschicht 30 mit dem faserverstärkten Material gebildet. Die Schutzschicht 40 kann direkt an der Wandung bzw. der Tragschicht 30 des Grundkörpers 20 aufgebracht sein oder es kann dazwischen eine (in der Fig. nicht dargestellte) Zwischenschicht zwischen der Schutzschicht 40 und dem Grundkörper 20 bzw. der Tragschicht 30 angeordnet sein.

Bevorzugt weist der Hohlkörper 10 zusätzlich eine Außenschicht 60 auf, welche vorzugsweise witterungsbeständig, insbesondere UV-beständig ist.

Bevorzugt weist die Schutzschicht 40 wenigstens ein Polymer, wie beispielsweise wenigstens ein Harz, und wenigstens einen faserfreien Füllstoff auf oder ist daraus gebildet. Der faserfreie Füllstoff wiederum kann aus Keramikpartikeln bestehen oder Keramikpartikel enthalten.

Bevorzugt ist die Tragschicht 30 durch wenigstens ein Polymer, beispielsweise wenigstens ein Harz, und wenigstens einer faserbasierten Verstärkungsstruktur, wie beispielsweise eine Schnittglasmatte, gebildet. Auch kann die Außenschicht 60 ebenfalls durch ein Polymer, wie beispielsweise ein Harz gebildet sein oder ein solches Material enthalten. Darüber hinaus kann in der Außenschicht 60 zur Verstärkung ein Vlies oder dergleichen faserverstärktes Gebilde eingelassen bzw. eingebettet sein.

Ein solches als Rohrelement ausgebildeter Hohlkörper 10 kann in den Nennweiten der Größen DN 25 bis DN 800 realisiert sein.

In der nachfolgenden Tabelle sind beispielhaft vier Prototypen des Hohlkörpers 10 in Art eines Rohrelementes, beispielsweise in Form eines geflanschten Rohres angegeben, wobei beispielhaft auf die Nennweite der Größe DN 200 zurückgegriffen ist. Bei den in der Tabelle aufgeführten vier Hohlkörpern 10, welche dort als Prototyp A, Prototyp B, Prototyp C und Prototyp D bezeichnet sind, sind die Schutzschicht 40, die Tragschicht 30 und die Außenschicht 60 aus dem gleichen Polymer hergestellt.

Bei dem Prototyp A ist das Polymer ein ungesättigtes Polyesterharz auf Basis wenigstens einer HET-Säure und Neopenthylglycol. Bei dem Prototyp B ist das wenigstens eine Polymer ein Vinylesterharz auf Basis wenigstens eines Novolaks, bei dem Prototyp C und bei dem Prototyp D ist das wenigstens eine Polymer ein Epoxidharz auf Basis eines Bisphenol A mit zykloaliphatischem Polyamidhärter.

Aus der Tabelle sind die Dicke der Schutzschicht 40 sowie der Massenanteil des Füllstoffes an der Schutzschicht 40 und der verwendete Füllstoff als solches ersichtlich. Ferner ist bezüglich der Tragschicht 30 die Dicke ersichtlich und das als Faserverstärkung genutzte Material sowie dessen Anteil an der Gesamtmasse der Tragschicht 30. Darüber hinaus ist aus der Tabelle die Dicke der Außenschicht 60 ersichtlich sowie Angaben zu einem in der Außenschicht 60 eingelassenes Vlies gemacht.

Zur Faserverstärkung der Tragschicht 30 kommen wenigstens eine E-Schnittglasmatte und wenigstens ein E-Glasgewebe zum Einsatz, welche im Wechsel zueinander angeordnet sind. Bevorzugt weisen die E-Schnittglasmatte eine flächenbezogene Masse, nachfolgend auch als Flächengewicht bezeichnet, von etwa 450g/m² und das E-Glasgewebe ein Flächengewicht von 800g/m² auf. Das in der Außenschicht 60 verwendete Vlies ist aus einem C-Glas mit einem Flächengewicht von etwa 33g/m² bei den Prototypen A, B und D gebildet. Der Prototyp C weist ein Polyestervlies auf, welches ein Flächengewicht von etwa 26g/m² hat.

**Tabelle: Prototypen als Rohrelement mit Nennweite DN 200**

| Prototyp | Schutzschicht | | | Tragschicht | | | Außenschicht | |
|---|---|---|---|---|---|---|---|---|
| | Dicke | Füllstoff | Anteil | Dicke | Faserverstärkung | Anteil | Dicke | Vlies |
| A | 3,5mm | AluminiumOxid | 30% | 3mm | E-Schnittglasmatte E-Glasgewebe | 40% | 0,3mm | C-Glas |
| B | 3,5mm | Aluminiumoxid | 30% | 3mm | E-Schnittglasmatte E-Glasgewebe | 40% | 0,3mm | C-Glas |
| C | 3,5mm | Aluminiumoxid | 30% | 3mm | E-Schnittglasmatte E-Glasgewebe | 40% | 0,3mm | PolyEster |
| D | 25mm | Siliciumcarbid | 85% | 5mm | E-Schnittglasmatte E-Glasgewebe | 40% | 0,3mm | C-Glas |

Eine mögliche Vorgehensweise zur Herstellung eines Hohlkörpers, wie er beispielsweise aus der einzigen Figur ersichtlich ist, kann wie folgt beschrieben werden:
Es wird auf ein, den Hohlraum 70 des Hohlkörpers 10 ausformendes Kernelement eine fließfähige chemische Zusammensetzung aufgebracht. Die fließfähige chemische Zusammensetzung enthält das wenigstens eine Polymer und den faserfreien Füllstoff sowie Härter und gegebenenfalls Beschleuniger. Beispielsweise wird die fließfähige chemische Zusammensetzung auf das Kernelement dadurch aufgebracht, dass das Kernelement in Rotation versetzt wird und durch Streichen, Sprühen, Aufgießen oder dergleichen wird die chemische Zusammensetzung auf das Kernelement aufgetragen, so dass sich eine Schicht ausbildet, welche nach Abbinden und Aushärten die Schutzschicht 40 bildet.

Je nach gewünschter Schichtdicke kann das Aufbringen in mehreren Teilschritten bis zu einer vorgegebenen Enddicke der Schutzschicht 40 erfolgen.

Auf die noch nicht gelierte Schicht der bereits aufgetragenen chemischen Zusammensetzung wird nunmehr eine Schnittglasmatte aufgelegt und darauf dann wenigstens ein Polymer, beispielsweise eine Harzzusammensetzung aus ungesättigtem Polyesterharz, Beschleuniger und Härter aufgebracht. Es ist dadurch eine Schicht aus Schnittglasmatten gebildet, welche die erste Lage der Tragschicht 30 ausbildet.

Nach Gelierung der Schutzschicht 40 und der ersten Lage der Tragschicht 30 erfolgt dann die weitere Laminierung der Tragschicht 30 mittels konventioneller Verfahren, beispielsweise mittels händischer Laminierung mit der bereits zur Ausbildung der ersten Lage der Tragschicht 30 verwendeten Harzzusammensetzung und textilen Glasfaserprodukten, beispielsweise in Form von Schnittglasmatten und Glasgeweben. Dieses Aufbauen der weiteren Lagen der Tragschicht 30 erfolgt solange, bis die angestrebte Dicke der Tragschicht 30 erreicht ist.

Zur Ausbildung der Außenschicht 60 wird anschließend vorzugsweise styrollösliches Glasfaservlies auf die Oberfläche der noch nicht gelierten Oberfläche der Tragschicht 30 aufgebracht und das Glasvlies mittels einer Harzzusammensetzung beispielsweise aus ungesättigtem Polyesterharz, Beschleuniger, Paraffinwachs, UV-Inibitor und Härter getränkt und die Außenschicht 60 dadurch nach außen hin versiegelt.

Nach Aushärten und gegebenenfalls einer Wärmenachbehandlung der Materialien ist der Hohlkörper 10 fertig gestellt.

## Patentansprüche

1. Faserverstärkter Hohlkörper (10) zum Durchleiten von Medien, insbesondere chemisch und/oder mechanisch aggressiven Medien, beispielsweise der chemischen Industrie und/oder der Prozessindustrie, mit einem Grundkörper (20), aufweisend ein Fasern enthaltendes Material, und mit einer aus einem faserfreien Material oder im Wesentlichen faserfreien Material gebildeten Schutzschicht (40) zum Schutz des Hohlkörpers (10) gegen chemische und/oder mechanische Angriffe, wobei die Schutzschicht (40) wenigstens ein Polymer und wenigstens einen faserfreien Füllstoff enthält oder daraus besteht, **dadurch gekennzeichnet, dass** der faserfreie Füllstoff aus Partikeln besteht oder Partikel aufweist, welche aus Keramik bestehen oder Keramik aufweisen.

2. Hohlkörper nach Anspruch 1, **dadurch gekennzeichnet, dass** das wenigstens eine Polymer ein Epoxidharz ist oder enthält, welches ein Epoxidharz auf Basis wenigstens eines Bisphenols, auf Basis wenigstens eines Novolaks oder ein aliphatisches Epoxidharz ist.

3. Hohlkörper nach Anspruch 1, **dadurch gekennzeichnet, dass** das wenigstens eine Polymer ein Polyesterharz ist oder enthält, welches ein Polyesterharz auf Basis von HET-Säure und/oder auf Basis von Neophentylglycol ist.

4. Hohlkörper nach Anspruch 1, **dadurch gekennzeichnet, dass** das wenigstens eine Polymer ein Vinylesterharz ist oder enthält, welches ein Vinylesterharz auf Basis wenigstens eines Bisphenol A und/oder auf Basis wenigstens eines Novolaks ist.

5. Hohlkörper nach einem der vorhergehenden Ansprüche, **dadurch gekennzeichnet, dass** die Partikel einen Äquivalentdurchmesser von etwa 2 Mikrometer bis etwa 7 Millimeter haben.

6. Hohlkörper nach einem der vorhergehenden Ansprüche, **dadurch gekennzeichnet, dass** zumindest ein Teil der Partikel einen Äquivalentdurchmesser von etwa 2 Mikrometer bis etwa 500 Mikrometer hat.

7. Hohlkörper nach einem der vorhergehenden Ansprüche, **dadurch gekennzeichnet, dass** der Füllstoff Aluminiumoxid oder Siliciumcarbid ist oder Aluminiumoxid und/oder Siliciumcarbid enthält.

8. Hohlkörper nach einem der vorhergehenden Ansprüche, **dadurch gekennzeichnet, dass** der Füllstoff Aluminiumtitanat, Bariumtitanat, Berylliumoxid, Zirkonium(IV)-oxid, Titan(IV)-oxid oder eine sonstige oxidische Keramik ist oder enthält.

9. Hohlkörper nach einem der vorhergehenden Ansprüche, **dadurch gekennzeichnet, dass** der Füllstoff einen Anteil an der Gesamtmasse der Schutzschicht (40) von etwa 60 Prozent bis etwa 95 Prozent hat.

10. Hohlkörper nach einem der vorhergehenden Ansprüche, **dadurch gekennzeichnet, dass** die Schutzschicht (40) eine Dicke von 5 Millimeter bis 40 Millimeter hat.

11. Hohlkörper nach einem der vorhergehenden Ansprüche, **dadurch gekennzeichnet, dass** der Grundkörper (20) eine Wanddicke von etwa 2 Millimeter bis etwa 40 Millimeter hat.

12. Hohlkörper nach einem der vorhergehenden Ansprüche, **dadurch gekennzeichnet, dass** die Schutzschicht (40) eine Innenschicht (50) ist und der Grundkörper (20) eine witterungsbeständige Außenschicht (60) hat.

13. Hohlkörper nach Anspruch 12, **dadurch gekennzeichnet, dass** die Außenschicht (60) eine Wanddicke von 50 Mikrometer bis 200 Mikrometer hat.

## Claims

1. Fibre-reinforced hollow body (10) for conveying media, in particular chemically and/or mechanically aggressive media, for example of the chemical industry and/or the process industry, having a main element (20) comprising a fibre-containing material and having a protective layer (40) formed by a fibre-free material or substantially fibre-free material for protecting the hollow body (10) against chemical and/or mechanical attack, where the protective layer (40) contains or consists of at least one polymer and at least one fibre-free filler, **characterized in that** the fibre-free filler consists of or comprises particles which consist of or comprise ceramic.

2. Hollow body according to Claim 1, **characterized in that** the at least one polymer is or contains an epoxy resin which is an epoxy resin based on at least one bisphenol, based on at least one novolac or an aliphatic epoxy resin.

3. Hollow body according to Claim 1, **characterized in that** the at least one polymer is or contains a polyester resin which is a polyester resin based on HET acid and/or based on neopentyl glycol.

4. Hollow body according to Claim 1, **characterized in that** the at least one polymer is or contains a vinyl ester resin which is a vinyl ester resin based on at least one bisphenol A and/or based on at least one novolac.

5. Hollow body according to any of the preceding claims, **characterized in that** the particles have an equivalent diameter of from about 2 microns to about 7 millimetres.

6. Hollow body according to any of the preceding claims, **characterized in that** at least part of the particles has an equivalent diameter of from about 2 microns to about 500 microns.

7. Hollow body according to any of the preceding claims, **characterized in that** the filler is aluminium oxide or silicon carbide or contains aluminium oxide and/or silicon carbide.

8. Hollow body according to any of the preceding claims, **characterized in that** the filler is or contains aluminium titanate, barium titanate, beryllium oxide, zirconium(IV) oxide, titanium(IV) oxide or another oxidic ceramic.

9. Hollow body according to any of the preceding claims, **characterized in that** the filler has a proportion of the total mass of the protective layer (40) of from about 60 per cent to about 95 per cent.

10. Hollow body according to any of the preceding claims, **characterized in that** the protective layer (40) has a thickness of from 5 millimetres to 40 millimetres.

11. Hollow body according to any of the preceding claims, **characterized in that** the main element (20) has a wall thickness of from about 2 millimetres to about 40 millimetres.

12. Hollow body according to any of the preceding claims, **characterized in that** the protective layer (40) is an inner layer (50) and the main element (20) has a weathering-resistant outer layer (60).

13. Hollow body according to Claim 12, **characterized in that** the outer layer (60) has a wall thickness of from 50 microns to 200 microns.

## Revendications

1. Corps creux renforcé par des fibres (10) servant à acheminer des milieux, en particulier des milieux chimiquement et/ou mécaniquement agressifs, par exemple de l'industrie chimique et/ou de l'industrie des processus, comprenant un corps de base (20) comportant un matériau contenant des fibres, et une couche de protection (40), formée à partir d'un matériau sans fibres ou à partir d'un matériau essentiellement sans fibres, servant à protéger le corps creux (10) contre les attaques chimiques et/ou mécaniques, la couche de protection (40) contenant au moins un polymère et au moins une charge sans fibres ou en étant constituée, **caractérisé en ce que** la charge sans fibres est constituée de particules ou comprend des particules, qui sont constituées de céramique ou comprennent de la céramique.

2. Corps creux selon la revendication 1, **caractérisé en ce que** ledit au moins un polymère est ou contient une résine époxyde, qui est une résine époxyde à base d'au moins un bisphénol, à base d'au moins une novolaque ou une résine époxyde aliphatique.

3. Corps creux selon la revendication 1, **caractérisé en ce que** ledit au moins un polymère est ou contient une résine de polyester, qui est une résine de polyester à base d'un acide HET et/ou à base de néopentylglycol.

4. Corps creux selon la revendication 1, **caractérisé en ce que** ledit au moins un polymère est ou contient une résine d'ester de vinyle, qui est une résine d'ester de vinyle à base d'au moins un bisphénol A et/ou à base d'au moins une novolaque.

5. Corps creux selon l'une quelconque des revendications précédentes, **caractérisé en ce que** les particules ont un diamètre équivalent d'environ 2 micromètres à environ 7 millimètres.

6. Corps creux selon l'une quelconque des revendications précédentes, **caractérisé en ce qu'**au moins une partie des particules présentent un diamètre équivalent d'environ 2 micromètres à environ 500 micromètres.

7. Corps creux selon l'une quelconque des revendications précédentes, **caractérisé en ce que** la charge est de l'oxyde d'aluminium ou du carbure de silicium ou contient de l'oxyde d'aluminium et/ou du carbure de silicium.

8. Corps creux selon l'une quelconque des revendications précédentes, **caractérisé en ce que** la charge est ou contient du titanate d'aluminium, du titanate de baryum, de l'oxyde de béryllium, de l'oxyde de zirconium (IV), de l'oxyde de titane (IV) ou une autre céramique oxydique.

9. Corps creux selon l'une quelconque des revendications précédentes, **caractérisé en ce que** la charge a une proportion de la masse totale de la couche de protection (40) d'environ 60 pour cent à environ 95 pour cent.

10. Corps creux selon l'une quelconque des revendications précédentes, **caractérisé en ce que** la couche de protection (40) a une épaisseur de 5 millimètres à 40 millimètres.

11. Corps creux selon l'une quelconque des revendications précédentes, **caractérisé en ce que** le corps de base (20) a une épaisseur de paroi d'environ 2 millimètres à environ 40 millimètres.

12. Corps creux selon l'une quelconque des revendications précédentes, **caractérisé en ce que** la couche de protection (40) est une couche intérieure (50) et le corps de base (20) a une couche extérieure (60) résistante aux intempéries.

13. Corps creux selon la revendication 12, **caractérisé en ce que** la couche extérieure (60) a une épaisseur de paroi de 50 micromètres à 200 micromètres.
